# EUROPÄISCHE PATENTSCHRIFT

(11) **EP 0 289 971 B1**
(45) Veröffentlichungstag und Bekanntmachung des Hinweises auf die Patenterteilung: **11.08.1993**
(21) Anmeldenummer: 88106977.7
(22) Anmeldetag: 30.04.1988
(51) Int. Cl.: G06F 1/00, B41J 11/58

(54) **Dateneingabegerät**
Data input device
Appareil pour l'entrée de données

(30) Priorität: 06.05.1987 DE 3714969
(43) Veröffentlichungstag der Anmeldung: 09.11.1988
(73) Patentinhaber: Alcatel SEL Aktiengesellschaft, D-70435 Stuttgart (DE); ALCATEL N.V., NL-1077 XX Amsterdam (NL)
(72) Erfinder: Deeg, Reinhard, D-7538 Keltern 2 (DE)
(74) Vertreter: Graf, Georg Hugo, Dipl.-Ing.

(56) Entgegenhaltungen:
- EP-A- 0 257 589
- GB-A- 2 184 694
- US-A- 4 620 808
- PATENT ABSTRACTS OF JAPAN, Band 6, Nr. 133 (P-129)[1011], 20. Juli 1982; & JP-A-57 57 326 (CANON)

## Beschreibung

Die Erfindung betrifft ein Dateneingabegerät gemäß dem Oberbegriff des Anspruchs 1.

Bei Dateneingabegeräten, wie z. B. Fernschreibern und Personal Computern, ist es üblich, den eingegebenen Text zwischenzuspeichern und auf dem Bildschirm eines Monitors wiederzugeben, bevor er ausgesendet bzw. ausgedruckt wird.

Bei einem Fernschreiber der Firma Standard Elektrik Lorenz AG, Stuttgart, der unter der Bezeichnung "LO 3000" vertrieben wird, ist der Monitor gegenüber der Eingabetastatur und dem Druckwerk seitlich versetzt. Der Blick auf den Monitor erfordert von einer vor dem Gerät sitzenden Bedienungsperson eine Augen- oder Kopfdrehung zur Seite. Dieses kann zur Ermüdung führen.

Bei einem Fernschreiber der Firma Siemens AG, München, der unter der Bezeichnung "T 1200 Monitor" vertrieben wird, ist der Monitor nach Art der Personal Computer auf einem die Steuerelektronik und ein Diskettenlaufwerk enthaltenden sockelartigen Gehäuse montiert. Davor befindet sich eine abgesetzte Eingabetastatur, die über ein Kabel angeschlossen ist. Das zugehörige Druckwerk mit Papiervorratsrolle ist ein separates Gerät, das neben dem Monitorgerät aufzustellen ist. Diese Konzeption benötigt jedoch mindestens den doppelten Platz als ein Fernschreiber einteiliger Ausführung.

Die Aufgabe der Erfindung besteht daher darin, ein Dateneingabegerät, wie z. B. einen Fernschreiber mit Monitor oder einen Personal Computer, zu schaffen, bei dem das Druckwerk mit zugehörigem Papiervorrat und dem Monitor optimal in einem Gerät zusammengefaßt sind.

Diese Aufgabe wird durch die im Anspruch 1 angegebenen Merkmale gelöst. Die Unteransprüche zeigen vorteilhafte Ausgestaltungen des Erfindungsgegenstandes auf. Die durch die Erfindung erzielten Vorteile bestehen insbesondere darin, daß der Monitor in ergonomisch richtiger Position zur Bedienungsperson symmetrisch zum Druckwerk über der versenkt angeordneten Papiervorratsrolle angeordnet ist, daß der Monitor kippbar ist, so daß sich die Papiervorratsrolle problemlos von vorne auswechseln läßt und daß durch die versenkte Anordnung der Papiervorratsrolle unmittelbar hinter dem Druckwerk ein sehr kurzer Papierweg bis zur Druckwalze des Druckwerkes gegeben ist, so daß die bisher notwendigen Führungsmittel entfallen können.

Anhand eines Ausführungsbeispiels wird die Erfindung in Verbindung mit den Zeichnungen nachfolgend näher erläutert. Es zeigt:
- Fig. 1: ein Dateneingabegerät in der Ausführung als Fernschreiber in Perspektivdarstellung
- Fig. 2: das Gerät der Fig. 1 im Schnitt II-II,
- Fig. 3: das Gerät der Fig. 1 im Schnitt III-III, Teildarstellung
- Fig. 4: das Gerät der Fig. 1 im Schnitt II-II, Monitor hochgekippt.

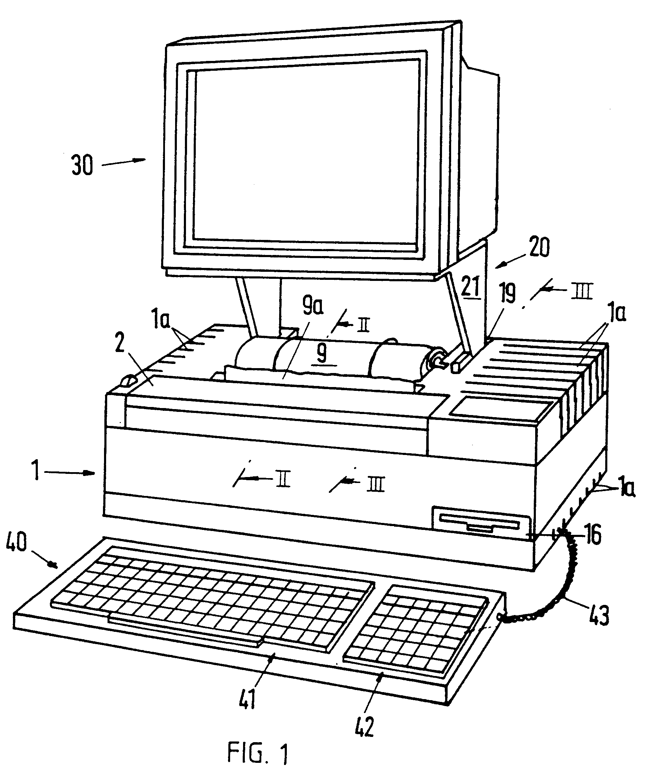

Fig. 1 zeigt ein Dateneingabegerät in Perspektivdarstellung, das im vorliegenden Fall als Fernschreiber konzipiert ist, dessen Grundkonzepten sich jedoch auch für einen Personal Computer eignet, in den ein Druckwerk mit einem Papiervorrat, z. B. in Form eines Einzelblattmagazins mit Zuführeinrichtung oder in Form von randgelochtem Lagenpapier, integriert ist.

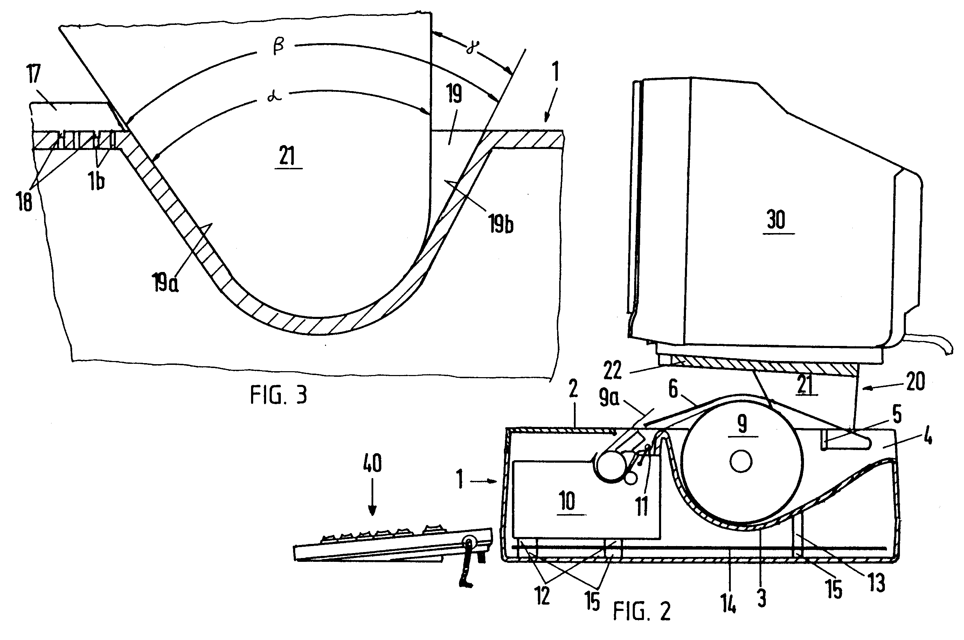

Das Gerät gemäß Fig. 1 hat ein quaderförmiges Gehäuse 1, in dem sich ein Druckwerk 10 (Fig. 2) befindet, hinter dem eine Papiervorratsrolle 9 in einer Wanne 3 (Fig. 2) versenkt angeordnet ist. Das Gehäuse 1 hat über die Breite des Druckwerkes eine durchsichtige Klappe 2, die bei geschlossenem Gehäuse 1 einen Zugriff zum Druckwerk ermöglicht. Neben dem Druckwerk befindet sich im Gehäuse 1 ein Diskettenlaufwerk 16 und hinter diesem ein Netzteil zur Spannungsversorgung des Gerätes. Lüftungsschlitze 1a auf beiden Seiten des Gehäuses 1 dienen zur Belüftung und zur Wärmeabfuhr.

Durch die vorbeschriebene Anordnung ist das Druckwerk und die Papiervorratsrolle 9 im Gehäuse 1 seitlich versetzt. Zum Gerät gehört eine abgesetzte Eingabetastatur 40, die über ein Kabel 43 mit dem Gehäuse 1 bzw. mit der darin befindlichen Schaltung elektrisch verbunden ist. Die Eingabetastatur 40 hat ein Alpha-Tastenfeld 41 und ein numerisches Tastenfeld 42, das Sonderzeichen einschließt. Bei auf das Gehäuse 1 ausgerichteter Tastatur 40, wie es Fig. 1 zeigt, ist das Alpha-Tastenfeld 41 symmetrisch zum Druckwerk unter der Klappe 2 angeordnet. Eine vor dem Tastenfeld 41 sitzende Bedienungsperson blickt damit direkt auf die das Gehäuse 1 verlassende Papierbahn 9a.Rechts und links von der Wanne 3 hat das Gehäuse 1 in die Deckfläche eingelassene Lagerschlitze 19. In diesen steckt eine Konsole 20 mit ihren Stützen 21. Auf einer, die beiden Stützen 21 verbindenden Platte 22 ist ein Monitor 30 befestigt. Die Konsole 20 ist so ausgebildet, daß sich der Monitor 30 sowohl im ergonomisch richtigen Abstand als auch in der richtigen Höhe zu einer vor dem Gerät sitzenden Bedienungsperson befindet.

Fig. 2 zeigt das Gerät der Fig. 1 im Schnitt II-II in schematischer Darstellung, die aus Gründen der besseren Übersicht auf die wesentlichen Teile im Gehäuse 1 und der Konsole 20 beschränkt ist. Wie die Darstellung zeigt, schließt die Wanne 3, in der die Papiervorratsrolle 9 angeordnet ist, unmittelbar an das Druckwerk 10 an. Dadurch wird ein optimal kurzer Papierweg zwischen der Rolle 9 und der Schreibwalze des Druckwerkes 10 erreicht. Die Papiervorratsrolle 9 wird zwischen Seitenwänden 4 der Wanne 3 geführt. Der vordere Rand der Wanne 3 ist gemäß der Darstellung ein bündig mit der Gehäuseoberfläche abschließender Wulst. Über diesen läuft die von der Vorratsrolle 9 abgezogene Papierbahn 9a, die dadurch je nach dem Durchmesser der Rolle 9 weniger oder mehr gewölbt wird. Ein Schlaufenbildner 11 untestützt dieses. Die Wölbung verhindert bei Mehrlagenpapier, daß diese sich im Bereich zwischen der Papiervorratsrolle 9 und dem Druckwerk 10 gegenseitig verschieben. Sie bewirkt außerdem eine Versteifung der Papierbahn 9a im Wölbungsbereich, durch die ein Herauslaufen aus der Führung unterbunden wird. Im Betriebszustand des Gerätes liegt ein Bügel 6 über der Rolle 9, der in nach oben offenen Nuten 5 in den Seitenwänden 4 schwenkbar gelagert ist. Durch den Bügel 6 wird die beschriftete Papierbahn 9a nach hinten über die Papiervorratsrolle 9 abgeleitet. Der Rand der Wanne 3 ist hinten niedriger als vorne, so daß die Papierbahn 9a im hinteren Bereich des Gehäuses 1 zwischen den Seitenwänden 4 der Wanne 3 geführt wird. Unter dem Druckwerk 10, der Wanne 3, dem Diskettenlaufwerk 16 (Fig. 1) und dem Netzteil ist eine Leiterplatte 14 angeordnet, die die gesamte Steuerelektronik umfaßt. Die Leiterplatte 14 ist zwischen Abstandsstücken 15 und Füßen 12 des Druckwerkes 10, des Diskettenlaufwerks und des Netzteiles bzw. Abstützungen 13 der Wanne 3 im Bodenteil des Gehäuses 1 befestigt.

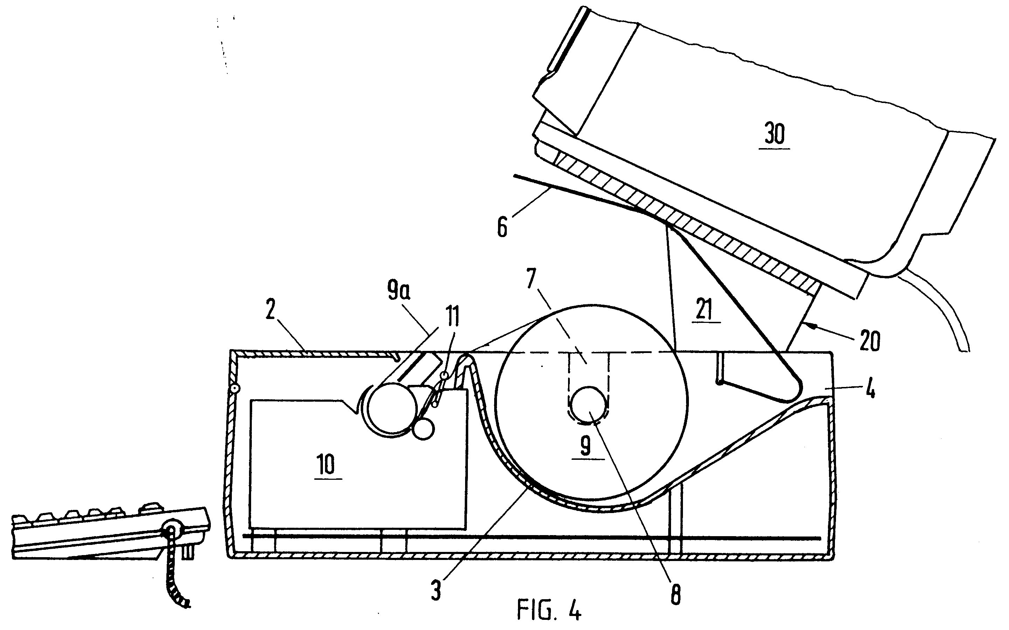

Fig. 3 zeigt das Gerät der Fig. 1 im Schnitt III-III in einer vergrößerten Teildarstellung. Der Ausschnitt zeigt einen der beiden in die Deckfläche des Gehäuses 1 eingelassenen Lagerschlitze 19 im Längsschnitt, in dem die eine Stütze 21 der Konsole 20 ruht. Wie die Zeichnung zeigt, verjüngen sich sowohl die Schlitze 19 als auch die Stützen 21 keilförmig nach unten. Im Bereich der Auflage sind beide gleichförmig abgerundet. Der Öffnungswinkel β der Lagerschlitze 19 ist um einen Winkel γ größer als der Keilwinkel α der Stützen 21. Die Konsole 20 kann daher aus der Anlage der Stützen 21 an der Vorderflanke 19a des jeweiligen Schlitzes 19 um den Winkel γ gekippt werden. In dieser Kippstellung liegen die Stützen 21 an der Rückflanke 19b des jeweiligen Schlitzes 19 an. Die Schlitze 19 und die Stützen 21 sind so ausgebildet, daß die Platte 22 der Konsole 20 in der ersten Stellung im wesentlichen waagerecht ist. Diese ist die Betriebslage (Fig. 2). In der Kippstellung nimmt die Konsole 20 und damit der aufgesetzte Monitor 30 die in Fig. 4 gezeigte Schräglage ein. Die Konsole 20 ist so ausgebildet und der Kippwinkel γ so bemessen, daß bei aufgesetztem Monitor 30 sowohl die Betriebslage als auch die Kippstellung stabile Lagen sind. Die Winkelstellung der Konsole 20 und damit des Monitors 30 ist in der Betriebslage durch verstellbare Anschläge 17 in Grenzen einstellbar. Die einfachste Form zeigt Fig. 3. Die Anschläge 17 haben aus der Unterseite herausragende Stifte 18, die in entsprechend beabstandete Löcher 1b in der Deckfläche des Gehäuses 1 eingreifen.

Fig. 4 zeigt das Gerät der Fig. 1 im Schnitt II-II bei hochgekipptem Monitor 30. In dieser Stellung liegen die Stützen 21 der Konsole 20 an der Rückflanke 19b des jeweiligen Lagerschlitzes 19 an (Fig. 3). In dieser Stellung läßt sich auch der Bügel 6 hochklappen. Der Abstand zwischen der Deckfläche des Gehäuses 1 und der Vorderkante der Konsolenplatte 22 ist so groß, daß die Papiervorratsrolle 9 problemlos von der Vorderseite des Gerätes her ausgewechselt werden kann. Die Papiervorratsrolle 9 hat eine an beiden Enden vorstehende Achse 8. Die Seitenwände 4 der Wanne 3 haben gegenüberliegend nach oben und innen offene Nuten 7, die der Achse 8 als Lager dienen. Ein Papiervorratswechsel erfolgt somit in einfacher Weise durch Herausnehmen der leeren Achse 8 und Einsetzen einer neuen Papiervorratsrolle 9. Sodann wird die Klappe 2 geöffnet und die Papierbahn 9a in das Druckwerk 10 in bekannter Weise eingelegt. Danach wird die Klappe 2 wiedergeschlossen und der Bügel 6 und die Konsole 20 mit dem Monitor 30 wieder in die Betriebslage zurückgekippt. Damit ist das Gerät wieder betriebsbereit.

## Patentansprüche

1. Dateneingabegerät mit einem Druckwerk in einem Gehäuse, einer zugehörigen Papiervorratsrollenaufnahme, einer Eingabetastatur und einem Monitor,
**dadurch gekennzeichnet**, daß
unmittelbar hinter dem Druckwerk (10) eine nach oben offene Aufnahme für die Papiervorratsrolle (9) in das Gehäuse (1) eingelassen ist, und daß über der Rollenaufnahme eine Konsole (20) für den Monitor (30) angeordnet ist, die sich aus der Betriebslage so kippen läßt, daß die Papiervorratsrolle (9) ausgewechselt werden kann.

2. Dateneingabegerät nach Anspruch 1, dadurch gekennzeichnet, daß das Gehäuse (1) auf beiden Seiten der Rollenaufnahme sich keilförmig nach unten verjüngende Lagerschlitze (19) hat, daß die Konsole (20) im Abstand der lagerschlitze (19) sich keilförmig verjüngende Stützen (21) hat und daß der Keilwinkel (α) der Stützen (21) um einen Kippwinkel (γ) kleiner ist als der öffnungswinkel (β) der Lagerschlitze (19).

3. Dateneingabegerät nach Anspruch 1 oder 2, dadurch gekennzeichnet, daß die Konsole (20) so ausgebildet ist und der Kippwinkel (γ) so bemessen ist, daß bei aufgesetztem Monitor (30) sowohl die Betriebslage des auch die Kippstellung stabile Lagen sind.

4. Dateneingabegerät nach Anspruch 1 oder 3, dadurch gekennzeichnet, daß die Betriebslage durch Anschläge (17) einstellbar ist.

5. Dateneingabegerät nach Anspruch 1, dadurch gekennzeichnet, daß die Aufnahme für die Papiervorratsrolle (9) eine nach oben offene Wanne (3) ist und daß die Wanne (3) parallele Seitenwände (4) hat, die nach oben offene Nuten (7) als Lager für die Achse (8) der Papiervorratsrolle (9) haben.

6. Dateneingabegerät nach Anspruch 1, dadurch gekennzeichnet, daß neben dem Druckwerk (10) ein Diskettenlaufwerk (16) im Gehäuse (1) angeordnet ist, daß im Raum hinter dem Diskettenlaufwerk (16) ein Netzteil im Gehäuse (1) angeordnet ist und daß unter dem Druckwerk (10), der Wanne (3), dem Diskettenlaufwerk (16) und dem Netzteil eine die Steuerelektronik umfassende Leiterplatte (14) angeordnet ist.

7. Dateneingabegerät nach Anspruch 1, dadurch gekennzeichnet, daß die Eingabetastatur (40) nur über ein Kabel (43) mit dem Gehäuse (1) verbunden ist.

## Claims

1. Data entry device comprising a printing mechanism in a housing, a portion for receiving a paper supply roll, an input keyboard and a monitor,
**characterized in** that a portion for receiving the paper supply roll (9) is formed by a recess in the housing (1) which is located immediately behind the printing mechanism (10) and is open at the top, and that a console (20) for the monitor (30) is located above the portion for receiving the paper supply roll, said console (20) being tiltable out of the operational position in such a manner that the paper supply roll (9) can be changed.

2. A data entry device as claimed in claim 1, characterized in that on both sides of the portion for receiving the paper supply roll, the housing (1) has bearing slots (19) tapering downwardly in the shape of a wedge, that the console (20) has supports (21) tapering in the shape of a wedge and separated by the same distance as the bearing slots (19), and that the wedge angle (α) of the supports (21) is smaller than the included angle (β) of the bearing slots (19) by a tilt angle (γ).

3. A data entry device as claimed in claim 1 or 2, characterized in that the console (20) is so designed and the tilt angle (γ) is so chosen that with the monitor (30) mounted on the console, both the operational position and the tilted position are stable positions.

4. A data entry device as claimed in claim 1 or 3, characterized in that the operational position can be adjusted with the aid of stops (17).

5. A data entry device as claimed in claim 1, characterized in that the portion for receiving the paper supply roll (9) is a trough (3) which is open at the top, and that the trough (3) has parallel sidewalls (4) with grooves (7) which are open at the top and constitute bearings for the shaft (8) of the paper supply roll (9).

6. A data entry device as claimed in claim 1, characterized in that beside the printing mechanism (10), a floppy disk drive (16) is contained in the housing (1), that in the space behind the floppy disk drive (16), a power supply is contained in the housing (1), and that a circuit board (14) supporting the control electronics is located below the printing mechanism (10), the trough (3), the floppy disk drive (16) and the power supply.

7. A data entry device as claimed in claim 1, characterized in that the input keyboard (40) is connected to the housing (1) only by a connection cable (43).

## Revendications

1. Appareil pour l'entrée de données, comportant une imprimante dans une carrosserie, un réceptacle correspondant pour rouleau de réserve de papier, un clavier d'entrée et un moniteur,
appareil caractérisé par le fait qu'immédiatement derrière l'imprimante (10) un réceptacle, ouvert vers le haut, pour le rouleau de réserve de papier (9) est foncé dans la carrosserie (1) et par le fait que par-dessus le réceptacle pour le rouleau est disposée, pour le moniteur (30), une console (20) que l'on peut basculer, à partir de sa position de service, de façon à pouvoir changer le rouleau de réserve de papier (9).

2. Appareil pour l'entrée de données selon la revendication 1, caractérisé par le fait que la carrosserie (1) présente, des deux côtés du réceptacle pour le rouleau, des fentes (19), formant palier, qui vont en diminuant en forme de coin vers le bas, par le fait que la console (20) présente, à l'écartement des fentes (19) formant palier, des appuis (21) qui vont en diminuant en forme de coin, et par le fait que l'angle de coin (α) des appuis (21) est plus petit, d'un angle de basculement (γ ), que l'angle d'ouverture (β ) des fentes formant palier (19).

3. Appareil pour l'entrée de données selon la revendication 1 ou 2, caractérisé par le fait que la console (20) est conçue, et l'angle de basculement ( γ), dimensionné, de façon que lorsque le moniteur (30) est posé sur la console, aussi bien la position de service que la position de basculement sont des positions stables.

4. Appareil pour l'entrée de données selon la revendication 1 ou 3, caractérisé par le fait que la position de service peut se régler au moyen de butées (17).

5. Appareil pour l'entrée de données selon la revendication 1, caractérisé par le fait que le réceptacle pour le rouleau de réserve de papier (9) est un baquet (3) ouvert vers le haut et par le fait que le baquet (3) a des parois latérales parallèles (4) qui présentent, comme palier pour le bobineau (8) du rouleau de réserve de papier (9), des rainures (7) ouvertes vers le haut.

6. Appareil pour l'entrée de données selon la revendication 1, caractérisé par le fait qu'à côté de l'imprimante (10) est disposée dans la carrosserie (1) une station pour disquette (16), par le fait que dans l'espace existant derrière la station pour disquette (16) est disposé dans la carrosserie (1) un bloc d'alimentation sur secteur et par le fait que sous l'imprimante (10), sous le baquet (3), sous la station pour disquette (16) et sous le bloc d'alimentation sur secteur est disposée une plaquette de circuit imprimé (14) contenant le circuit électrique de commande.

7. Appareil pour l'entrée de données selon la revendication 1, caractérisé par le fait que le clavier d'entrée (40) n'est relié à la carrosserie (1) que par l'intermédiaire d'un câble (43).
